# EUROPÄISCHE PATENTSCHRIFT

(11) **EP 2 992 970 B1**
(45) Veröffentlichungstag und Bekanntmachung des Hinweises auf die Patenterteilung: **15.05.2019**
(21) Anmeldenummer: 14183183.4
(22) Anmeldetag: 02.09.2014
(51) Int. Cl.: B05D 1/02, B05D 7/22, B29D 22/00, B60K 13/04, B60K 15/03

(54) **Tank und Verfahren zu dessen Herstellung**
Tank and method for its production
Réservoir et son procédé de fabrication

(43) Veröffentlichungstag der Anmeldung: 09.03.2016
(73) Patentinhaber: Salzburger Aluminium Aktiengesellschaft, 5651 Lend (AT)
(72) Erfinder: Schernthaner, Markus, 5620 Schwarzach (AT); Lind, Christoph, 8200 Gleisdorf (AT)
(74) Vertreter: Weiser, Andreas

(56) Entgegenhaltungen:
- CH-A- 495 898
- DE-U1- 9 206 410
- DE-U1-202013 101 659
- FR-A- 905 128
- US-A- 3 207 358
- US-A- 5 379 507

## Beschreibung

Die vorliegende Erfindung betrifft ein Verfahren zur Herstellung einer innenbeschichteten Kammer eines Tanks für Betriebsmittel von Kraftfahrzeugen, mit zwei metallischen Halbschalen, von denen eine zumindest eine von ihrem Rand beabstandete Öffnung aufweist. Die Erfindung betrifft ferner einen mithilfe eines solchen Verfahrens hergestellten Tank.

Metalltanks sind im Kraftfahrzeugbau weit verbreitet, da sie gut verarbeitbar sind und eine hohe Stabilität bei geringem Gewicht aufweisen, insbesondere wenn sie aus Aluminiumblech gefertigt sind. Jedoch sind Metalltanks nicht geeignet, aggressive Betriebsmittel, beispielsweise Harnstofflösungen wie AdBlue®, die als Katalysatorflüssigkeit zur Abgasreinigung in Dieselmotoren Verwendung finden, zu speichern, da sie nicht ausreichend korrosionsbeständig sind.

Um einen Metalltank gegenüber aggressiven Betriebsmitteln korrosionsbeständig zu machen, ist es bekannt, im Inneren des Tanks eine geeignete Beschichtung aufzubringen. Derartige Beschichtungen sind jedoch empfindlich gegenüber den beim Verschweißen der metallischen Tankteile auftretenden Temperaturen und werden deshalb erst nach Fertigstellung der metallischen Hülle des Tanks durch eine - z.B. für das Befüllen des Tanks vorgesehene - Öffnung hindurch eingebracht.

Ein dazu bekanntes Beschichtungsverfahren ist das sog. "Rotolining", bei welchem das Beschichtungsmaterial als Granulat durch die Öffnung des Tanks eingebracht, die Öffnung verschlossen und der Tank unter Erhitzung gedreht bzw. geschwenkt wird, sodass das Granulat aufschmilzt und sich an der Innenwand des Tanks absetzt. Allerdings ist dabei eine über die gesamte Innenoberfläche des Tanks gleichmäßige Beschichtungsdicke, wie dies zur Erzielung eines zuverlässigen Korrosionsschutzes unter gleichzeitig geringem Gewicht und hohem Fassungsvermögen des Tanks gefordert ist, nicht sicherzustellen. Ferner ist der maschinelle Aufwand für das Erhitzen und Drehverschwenken der vorgefertigten Tanks erheblich und das Verfahren zeitaufwändig, sodass es in übliche Tank-Fertigungsstraßen mit ihren kurzen Taktzeiten schlecht integrierbar ist.

Aus der DE 20 2013 101 659 U1 ist ein Metalltank bekannt, dessen Innenbeschichtung durch Sprühen aufgebracht ist. Beim Besprühen der Innenoberfläche des Tanks durch die Öffnung hindurch ist jedoch ebenfalls keine sehr gleichmäßige Beschichtungsdicke erzielbar, insbesondere an schwierig zugänglichen Ecken, Kanten und Ausbuchtungen; überdies ist der Zeitaufwand für das Besprühen der Innenoberfläche beträchtlich.

Aus der US 3,207,358 ist ein zweiteiliger, zusammengeschweißter Tank bekannt, bei dem auf den beiden Halbschalen des Tanks vor dem Verschweißen auf den jeweils innenliegenden Seiten eine Beschichtung aufgebracht ist. Die Beschichtung wird vor dem Zusammenfügen mit einer Maske derart aufgebracht, dass die Bereiche, welche miteinander verschweißt werden sollen frei von der Beschichtung gelassen werden. Nach dem Zusammenfügen der beiden Halbschalen werden die auf Stoß aneinander liegenden Bereiche der Innenbeschichtung durch den Schweißvorgang miteinander verschmolzen. Es findet keine zusätzliche Innenbeschichtung mittels eines Sprühvorgangs statt.

Die Erfindung setzt sich zum Ziel, ein Verfahren zur Herstellung einer innenbeschichteten Kammer eines Tanks zu schaffen, welches eine rasche Fertigung ermöglicht, damit in Fertigungsstraßen einfach integrierbar ist und zugleich eine hohe Korrosionsbeständigkeit des Tanks bei gleichzeitig geringem Gewicht und hohem Fassungsvermögen sicherstellt.

Dieses Ziel wird in einem ersten Aspekt der Erfindung mit einem Verfahren der einleitend genannten Art erreicht, welches die Schritte umfasst:
Aufbringen von Beschichtungsmaterial auf die konkave Innenseite jeder Halbschale unter Freilassen jeweils eines vom Rand der Halbschale ausgehenden umlaufenden Randbereichs;
Zusammenfügen der Halbschalen an den Randbereichen, außenseitiges Verschweißen der Randbereiche mit einer umlaufenden Schweißnaht und Abkühlenlassen derselben; und
Einführen einer Sprühdüse durch die zumindest eine Öffnung und Aufsprühen von weiterem Beschichtungsmaterial auf die nach innen sich darbietenden Teile der Randbereiche.

Dadurch kann eine sehr gleichmäßige Dicke der Innenbeschichtung für dauerhaften Korrosionsschutz ohne unnötige Sicherheitsreserven und ohne Einschränkungen des Fassungsvermögens des Tanks bei vorgegebenen Außenabmessungen erzielt werden, da die Innenoberflächen der Halbschalen großteils im nicht-zusammengefügten Zustand beschichtet werden, wobei sie gut zugänglich sind. Dennoch wird das bereits aufgebrachte Beschichtungsmaterial beim folgenden Verschweißen der Halbschalen von den dabei auftretenden hohen Temperaturen nicht beschädigt, da es von der Schweißnaht ausreichend beabstandet ist. Das folgende Aufsprühen von weiterem Beschichtungsmaterial auf die nach innen sich darbietenden, zunächst noch freiliegenden Teile der Randbereiche ist aufgrund ihrer geringen Fläche und gleichmäßig zugänglichen Lage im Tankinneren in kurzer Zeit und präzise zu bewerkstelligen.

In einer vorteilhaften Ausführungsform versprüht die eingeführte Sprühdüse das weitere Beschichtungsmaterial beim Aufsprühen in einer zur Schweißnaht etwa parallelen Ebene rundum. Dabei kann die Sprühdüse z.B. tellerförmig sein oder einen Rotations-Sprühkopf haben; das Aufsprühen des weiteren Beschichtungsmaterials ist dadurch präzise handhabbar und besonders rasch durchführbar.

In einer dazu alternativen Ausführungsform sitzt die Sprühdüse an einem Ende einer hakenförmigen Lanze, welche von ihrem anderen, außerhalb der Öffnung verbleibenden Ende aus bewegt wird. Eine solche Sprühdüse ist besonders klein und deshalb einfach durch die Öffnung einzuführen und kann dabei präzise einem z.B. durch einen Roboter gesteuerten Bewegungsablauf folgen. Dies ergibt einen hohe Flexibilität des Verfahrens und erlaubt die Anwendung auch bei unterschiedlich geformten Tanks, bei denen der Abstand der Spritzdüse zu den genannten Teilen der Randbereiche bei geeigneter Hakenform der Lanze im darauf abgestimmten Bewegungsablauf gleich bleibt, sodass eine gleichmäßige Dicke des weiteren Beschichtungsmaterials, z.B. auch in Ausbuchtungen der Randbereiche, erzielbar ist.

In dieser Ausführungsform ist es besonders günstig, wenn eine der Halbschalen zumindest zwei voneinander und von ihrem Rand beabstandete Öffnungen hat, wobei das Einführen der Sprühdüse für jede Öffnung separat ausgeführt wird und dabei die Sprühdüse das weitere Beschichtungsmaterial pro Öffnung jeweils auf einen anderen von mehreren in Umfangsrichtung aneinandergrenzenden Sektoren der Randbereiche aufsprüht. Dadurch wird erleichtert, auch in der sonst schlecht erreichbaren Nähe der (jeweils anderen) Öffnung eine gleichmäßige Dicke des weiteren Beschichtungsmaterials zu erzielen. Ferner könnten dabei auch zwei Lanzen mit Sprühdüsen, je eine pro Öffnung, gleichzeitig eingesetzt werden, was das Verfahren weiter beschleunigt.

An Beschichtungsmaterial steht eine breite Auswahl zur Verfügung. Besonders günstig ist es, wenn als Beschichtungsmaterial und weiteres Beschichtungsmaterial jeweils ein rasch aushärtendes Polymer, bevorzugt ein rasch aushärtender Polyharnstoff, aufgebracht oder aufgesprüht wird. So kann das Beschichtungsmaterial an das Betriebsmittel bzw. den Einsatzzweck des Tanks angepasst werden. Das rasche Aushärten begünstigt kurze Taktzeiten und wirkt einem Verfließen des aufgebrachten bzw. aufgesprühten Materials und somit auch schwerkraftbedingten Dickeschwankungen entgegen.

Um das Zusammenfügen der beiden Halbschalen zu vereinfachen, weist bevorzugt zumindest eine der beiden Halbschalen in ihrem Randbereich eine umlaufende Schulter auf, an welcher der Rand der anderen Halbschale beim Zusammenfügen zur Anlage kommt und verschweißt wird. Dies führt zu einem definierten Sitz der einen Halbschale an der anderen bereits vor dem Verschweißen und vereinfacht das Verschweißen im Vergleich zu einem Stoß-an-Stoß-Verschweißen der Ränder der Halbschalen. Ferner erhöht die umlaufende Schulter die Steifigkeit der Halbschale bereits im unverschweißten Zustand und vereinfacht so deren Handhabung.

In einer günstigen Ausführungsform zum Herstellen eines Zweikammertanks für unterschiedliche Betriebsmittel von Kraftfahrzeugen umfasst das Verfahren den vorangestellten Schritt:
Einsetzen einer der beiden Halbschalen in unbeschichtetem Zustand mit ihrer konvexen Außenseite in ein durch eine Endkappe zu einer zweiten Kammer abschließbares Mantelblech, außenseitiges Verschweißen der genannten Halbschale mit dem Mantelblech mittels einer umlaufenden Schweißnaht und Abkühlenlassen derselben. Dadurch bildet die genannte Halbschale in effizienter Weise zugleich eine Trennwand des Zweikammertanks, was besonders platz- und gewichtssparend ist. Das weitere Verfahren bleibt davon unbeeinträchtigt. Besonders günstig ist es dabei, wenn die genannte Halbschale eine umlaufende Schulter aufweist, an welcher das Mantelblech zur Anlage kommt und angeschweißt wird. Eine solche Schulter vereinfacht das Einsetzen der genannte Halbschale in das Mantelblech, indem sie einen sicheren Sitz gewährleistet.

In einem zweiten Aspekt schafft die Erfindung einen Tank mit einer innenbeschichteten Kammer für Betriebsmittel von Fahrzeugen, mit zwei metallischen Halbschalen, von denen eine zumindest eine von ihrem Rand beabstandete Öffnung aufweist, wobei die beiden Halbschalen miteinander an jeweils von ihren Rändern ausgehenden umlaufenden Randbereichen außenseitig mit einer umlaufenden Schweißnaht verschweißt sind, welcher Tank sich dadurch auszeichnet, dass die konkave Innenseite jeder Halbschale eine betriebsmittelresistente Beschichtung aufweist, von welcher jeweils der Randbereich frei ist, wobei auf die nach innen sich darbietenden Teile der Randbereiche eine weitere betriebsmittelresistente Beschichtung aufgebracht ist.

Hinsichtlich der Vorteile und weiteren Ausführungsformen des Tanks wird auf die obigen Ausführungen zum erfindungsgemäßen Verfahren verwiesen.

Um eine hohe Zuverlässigkeit der Beschichtung zu garantieren, ist es vorteilhaft, wenn die weitere Beschichtung die angrenzenden Beschichtungen der Halbschalen teilweise überlappt. Besonders bevorzugt sind die Beschichtungen und die weitere Beschichtung aus ein und demselben Material gefertigt. So kann das für das Betriebsmittel bzw. den Einsatzzweck am besten geeignete Material durchgängig eingesetzt werden; auch gehen die Beschichtungen und die weitere Beschichtung an den Flächen gegenseitiger Berührung eine gute Verbindung ein, selbst wenn diese Kontaktflächen im Querschnitt sichtbar bleiben.

Die Erfindung wird nachstehend anhand von in den beigeschlossenen Zeichnungen dargestellten Ausführungsbeispielen näher erläutert. In den Zeichnungen zeigen
Fig. 1 einen erfindungsgemäßen Tank mit einer innenbeschichteten Kammer und einer weiteren Kammer in einer Perspektivansicht von schräg oben;
die Fig. 2a bis 2d den Tank von Fig. 1 in verschiedenen Stadien der Herstellung, jeweils in einem (partiellen) Längsschnitt;
die Fig. 3a und 3b den Tank der Fig. 2a bis 2d in einem weiteren Herstellungsschritt in einer ersten Variante (Fig. 3a) in einem Längsschnitt und in einer zweiten Variante (Fig. 3b) in einem Querschnitt; und
Fig. 4 den fertigen Tank gemäß den Fig. 1 bis 3 in einem (partiellen) Längsschnitt.

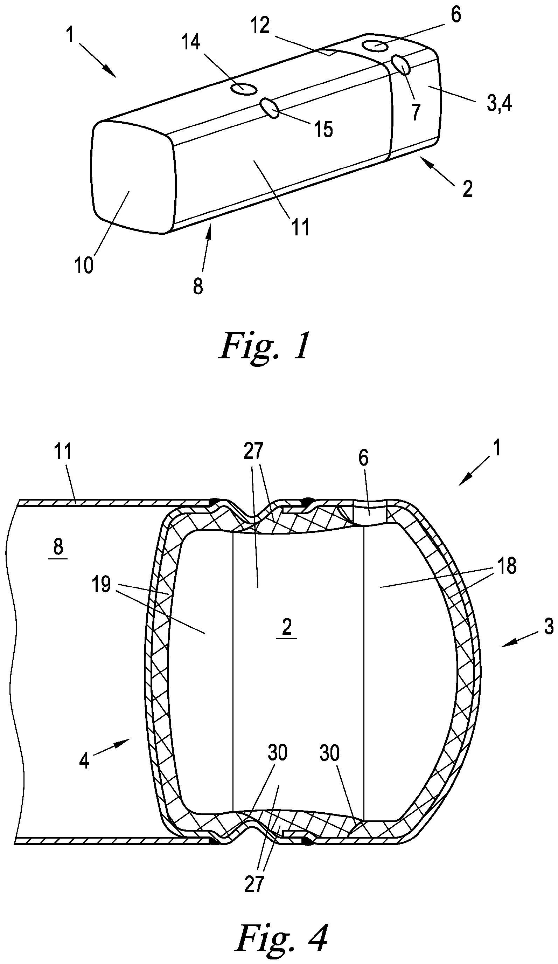

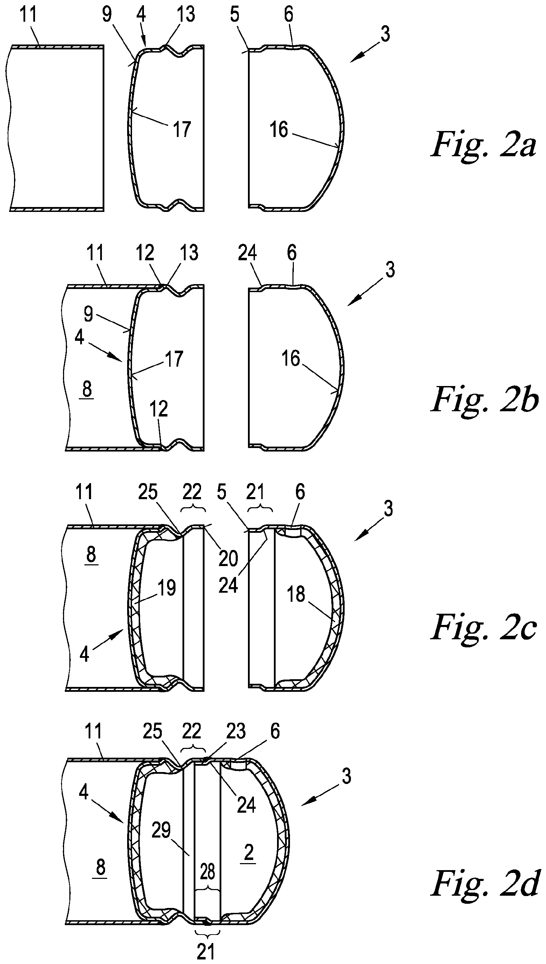

Gemäß den Fig. 1 und 2a bis 2d hat ein Tank 1 für Betriebsmittel von Kraftfahrzeugen eine Kammer 2, die mit zwei metallischen Halbschalen 3, 4 gebildet ist. Als Betriebsmittel kommen Treibstoffe aber auch aggressivere Betriebsstoffe in Betracht, z.B. Harnstofflösungen wie AdBlue®, die als Katalysatorflüssigkeit zur Abgasreinigung in Dieselmotoren beispielsweise von LKW Verwendung finden. Von den beiden Halbschalen 3, 4 weist eine, im Beispiel der Fig. 2a bis 2d die rechte Halbschale 3, zumindest eine von ihrem Rand 5 beabstandete Öffnung 6 auf.

Optional kann die Kammer 2 auch eine zweite Öffnung 7, die ihrerseits vom Rand 5 und der ersten Öffnung 6 beabstandet ist, aufweisen, wie in Fig. 1 gezeigt. Die Öffnungen 6, 7 dienen beispielsweise zum Befüllen der Kammer 2 und/oder zur Aufnahme eines Füllstands-, Temperatur- oder Drucksensors oder -ventils.

Der Tank 1 im Beispiel von Fig. 1 ist ein Mehrkammertank und hat neben der genannten Kammer 2 (z.B. für AdBlue®) zumindest eine weitere Kammer 8 für ein weiteres Betriebsmittel, z.B. Dieselkraftstoff. Die weitere Kammer 8 kann dabei einfach an die Kammer 2 angebaut, z.B. stumpf verschraubt, verklebt oder angeschweißt sein; der Tank 1 des Beispiels von Fig. 1 wurde hingegen hergestellt, indem gemäß Fig. 2b eine der beiden Halbschalen 3, 4 (hier: die linke Halbschale 4) in noch unbeschichtetem Zustand mit ihrer konvexen Außenseite 9 in ein durch eine Endkappe 10 (Fig. 1) abgeschlossenes Mantelblech 11 eingesetzt (Fig. 2a) und mit dem Mantelblech 11 mittels einer umlaufenden Schweißnaht 12 außenseitig verschweißt wird (Fig. 2b), worauf die Schweißnaht 12 abkühlengelassen wird.

Es versteht sich, dass die Endkappe 10 entweder vor oder nach dem Verschweißen von Mantelblech 11 und genannter Halbschale 4 in das Mantelblech 11 eingesetzt und dieses dadurch zu der weiteren Kammer 8 abgeschlossen werden kann. Auch kann die genannte Halbschale 4 optional eine umlaufende Schulter 13 aufweisen, an welcher das Mantelblech 11 zur Anlage kommt und angeschweißt wird. Ferner hat die weitere Kammer 8 optional zumindest eine Öffnung 14, 15 zum Befüllen, Sensoreinbau od.dgl.

Im Folgenden wird anhand der in den Fig. 2a bis 2d, 3a, 3b und 4 dargestellten Beispiele das Innenbeschichten der Kammer 2 und des dabei hergestellten Tanks 1 näher erläutert. Das dargestellte Verfahren kann dabei gleichermaßen zur Herstellung eines Tanks 1 mit einer oder mehr Kammern 2, 8 eingesetzt werden, d.h. mit dem oder ohne den vorangestellten, weiter oben beschriebenen Schritt des Verschweißens einer der Halbschalen 3, 4 mit dem Mantelblech 11. Dieser Verfahrensschritt könnte andererseits zur Erzeugung eines Dreikammertanks optional auch auf beide Halbschalen 3, 4 gleichartig angewendet werden, oder eine dritte und, wenn gewünscht, weitere Kammern 2, 8 in ähnlicher Weise an Endkappe 10 bzw. Mantel 11 angeschweißt werden.

Zunächst wird gemäß Fig. 2c auf die konkave Innenseite 16, 17 jeder Halbschale 3, 4 ein Beschichtungsmaterial als Beschichtung 18, 19 aufgebracht, z.B. aufgespritzt. Die Halbschalen 3, 4 sind während des Beschichtens voneinander getrennt, sodass deren Innenseiten 16, 17 jeweils ungehindert zugänglich sind. Dabei wird jeweils ein vom Rand 5 der rechten Halbschale 3 bzw. von einem Rand 20 der linken Halbschale ausgehender umlaufender Randbereich 21, 22 freigelassen, d.h. er bleibt in diesem Verfahrensschritt frei von Beschichtungsmaterial.

Nach dem zumindest teilweisen Aushärten der Beschichtungen 18, 19 werden die beiden Halbschalen 3, 4 an den Randbereichen 21, 22 zusammengefügt und außenseitig mithilfe einer umlaufenden Schweißnaht 23 verschweißt (Fig. 2d). Dabei können einerseits die Ränder 5, 20 der beiden Halbschalen 3, 4 direkt, d.h. Stoß-an-Stoß zusammengefügt und verschweißt werden. Alternativ weist, wie im Beispiel der Fig. 2a bis 2d gezeigt, zumindest eine der beiden Halbschalen 3, 4, in diesem Beispiel die rechte Halbschale 3, in ihrem Randbereich 21 eine umlaufende Schulter 24 auf, an welcher der Rand 20 der anderen Halbschale 4 beim Zusammenfügen zur Anlage kommt und verschweißt wird. Die Randbereiche 21, 22 sind möglichst schmal, dabei aber so breit gewählt, dass die Schweißnaht 23 von den Beschichtungen 18, 19 jeweils ausreichend beabstandet ist, sodass diese durch die beim Verschweißen auftretenden hohen Temperaturen nicht beschädigt werden.

Es versteht sich, dass jede der Halbschalen 3, 4, wenn gewünscht, weitere Verstärkungselemente haben kann, z.B. weitere Schultern oder Sicken wie die umlaufende Sicke 25 der linken Halbschale 4 im Beispiel der Fig. 2a bis 2d.

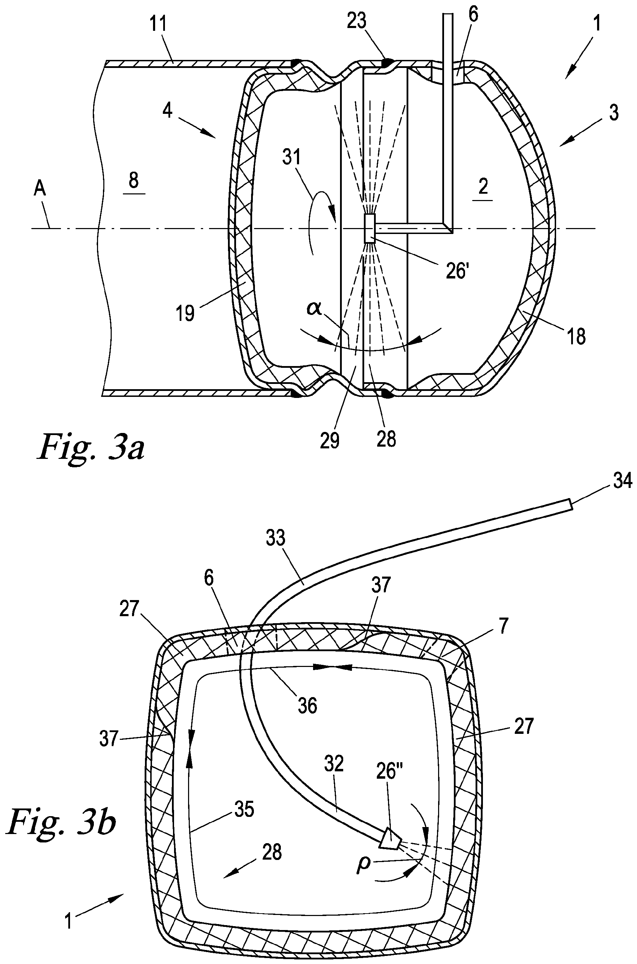

Im Beispiel der Fig. 3a und 3b wird nach dem Abkühlen der Schweißnaht 23 eine Sprühdüse 26' (Fig. 3a) bzw. 26" (Fig. 3b) durch die Öffnung 6 eingeführt und weiteres Beschichtungsmaterial als weitere Beschichtung 27 auf die nach innen sich darbietenden, zunächst noch freiliegenden Teile 28, 29 der Randbereiche 21, 22 der Halbschalen 3, 4 aufgesprüht. Überlappen einander die Randbereiche 21, 22 teilweise wie im Beispiel der Fig. 2c und 2d, so ist einer der nach innen sich darbietenden Teile 28, 29 - hier: Teil 29 des Randbereichs 22 der linken Halbschale 4 - schmäler als der Randbereich 22 selbst. Der verbleibenden Randbereich 22 ist durch den ihn überlappenden, beschichteten Randbereich 21 geschützt. Die Kammer 2 des Tanks 1 hat dadurch eine geschlossene Innenbeschichtung (Fig. 4).

Bevorzugt überlappt die weitere Beschichtung 27 die angrenzenden Beschichtungen 18, 19 der Halbschalen 3, 4 teilweise, wie dies Kontaktflächen 30 der in Fig. 4 im Querschnitt dargestellten Überlappungen versinnbildlichen.

In der Variante des Beispiels nach Fig. 3a versprüht die eingeführte Sprühdüse 26' das weitere Beschichtungsmaterial beim Aufsprühen zu einer der Schweißnaht 23 etwa parallelen, zur Längsachse A des Tanks 1 etwa normalen Ebene rundum auf die nach innen sich darbietenden, im Beispiel von Fig. 3a noch freiliegenden Teile 28, 29 der Randbereiche 21, 22 der Halbschalen 3, 4. Die Sprühdüse 26' von Fig. 3a ist dazu z.B. etwa tellerförmig, mit einzelnen Austrittsöffnungen für Beschichtungsmaterial an ihrem Außenumfang, und/oder sie hat einen Rotations-Sprühkopf, der das Beschichtungsmaterial beim Aufsprühen quer zur Längsachse A verteilt, wie durch Pfeil 31 in Fig. 3a symbolisiert. Je nach Sprühwinkel α der Sprühdüse 26' in der Ebene der Längsachse A des Tanks 1 und Breite der Teile 28, 29 der Randbereiche 21, 22 wird die Sprühdüse 26' beim Aufsprühen erforderlichenfalls etwa parallel zur Längsachse A verschoben.

In der dazu alternativen Ausführungsform von Fig. 3b sitzt die Sprühdüse 26" an einem Ende 32 einer hakenförmigen Lanze 33, welche von ihrem anderen, außerhalb der Öffnung 6 verbleibenden Ende 34 aus bewegt wird, sodass das Material der weiteren Beschichtung 27 auf die nach innen sich darbietenden, im Beispiel der Fig. 3b bereits fast vollständig beschichtenten Teile 28, 29 der Randbereiche 21, 22 gleichmäßig aufgesprüht wird. Hat, wie im Beispiel von Fig. 3b, die Halbschale 3 zumindest zwei voneinander und von ihrem Rand 5 beabstandete Öffnungen 6, 7, so kann optional das Einführen der Sprühdüse 26" am Ende 32 der Lanze 33 für jede Öffnung 6, 7 separat erfolgen und dabei die Sprühdüse 26" das Material der weiteren Beschichtung 27 pro Öffnung 6, 7 jeweils auf einen anderen von mehreren in Umfangsrichtung aneinandergrenzenden Sektoren 35, 36 der Randbereiche 21, 22 - im Beispiel von Fig. 3b: zwei Sektoren 35, 36 - aufsprüht. Anstatt nacheinander können auch zwei Lanzen 33 mit Sprühdüsen 26" gleichzeitig durch die beiden Öffnungen 6, 7 hindurch arbeiten (nicht dargestellt). Wieder ist der Bewegungsablauf vom (nun räumlichen) Sprühwinkel 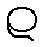 der Sprühdüse 26" und der Breite der nach innen sich darbietenden Teile 28, 29 der Randbereiche 21, 22 abhängig.

Das Einführen der Sprühdüse 26" und teilweise der Lanze 33 durch die Öffnung 6, 7 kann beispielsweise von Hand oder mithilfe einer geeigneten Maschine, z.B. eines Roboters (nicht dargestellt), erfolgen, die jeweils am außerhalb der Öffnung 6, 7 verbleibenden Ende 34 der Lanze 33 angreift und die Lanze 33 auch während des Aufsprühens der weiteren Beschichtung 27 gezielt bewegt.

Wird die weitere Beschichtung 27 wie erläutert sektorweise aufgesprüht, so überlappt diese nicht nur die angrenzenden Beschichtungen 18, 19, wie im Zusammenhang mit Fig. 4 weiter oben beschrieben wurde, sondern bildet auch selbst in Umfangsrichtung an den Grenzen der Sektoren 35, 36 Überlappungsbereiche mit in Fig. 3b versinnbildlichten Kontaktflächen 37.

Als Beschichtungsmaterial und weiteres Beschichtungsmaterial kann jeweils ein Polymer, bevorzugt ein Polyharnstoff aufgebracht oder aufgesprüht werden, das bzw. der rasch aushärtend ist. Das aufgebrachte Beschichtungsmaterial ist dabei vom Einsatzzweck, z.B. Umgebungstemperaturbereich, Verformungs- und Gewichtsbelastung etc., und dem vorgesehenen Betriebsmittel, z.B. AdBlue®, abhängig. Rasch aushärtende Polymere sind beispielsweise in zweikomponentiger Form verfügbar, in welchem Fall die beiden Komponenten direkt vor dem Aufbringen bzw. Aufsprühen vermengt werden. Die sich dabei ergebenden Beschichtungen 18, 19 und die weitere Beschichtung 27 kann, wenn gewünscht, aus ein und denselben Material gefertigt sein.

Selbst wenn als Beschichtungen 18, 19 und in allen Sektoren 35, 36 der weiteren Beschichtung 27 ein und dasselbe Beschichtungsmaterial aufgesprüht wird, bleiben die Kontaktflächen 30, 37 aufgrund der unterschiedlichen Zeitpunkte des Aufsprühens und Aushärtens der Beschichtungsmaterialien im Querschnitt erkennbar.

Die beiden Halbschalen 3, 4 werden bevorzugt durch Tiefziehen erzeugt; zumindest eine davon könnte aber alternativ - in ähnlicher Weise, wie weiter oben im Zusammenhang mit dem Verschließen des Mantelblechs 11 mit der Endkappe 10 zu der weiteren Kammer 8 beschrieben wurde - jeweils aus Mantelblech und Endkappe zusammengesetzt sein.

Ferner könnten die Öffnung 6 und die optionale Öffnung 7 anstatt die rechte Halbschale 3 auch die linke Halbschale 4, d.h. jene Halbschale, die im Falle eines Zweikammertanks an das Mantelblech 11 angeschweißt ist, durchsetzen, wenn dazu der Abstand zwischen Mantelblech 11 und Rand 20 der Halbschale 4 ausreichend groß ausgeführt ist; ferner könnte die Öffnung 6 die eine und die Öffnung 7 die andere der beiden Halbschale 3, 4 durchsetzen, wenn gewünscht.

Die Erfindung ist nicht auf dargestellten Ausführungsformen beschränkt, sondern umfasst alle Varianten und Modifikationen, die in den Rahmen der angeschlossenen Ansprüche fallen.

## Patentansprüche

1. Verfahren zur Herstellung einer innenbeschichteten Kammer (2) eines Tanks (1) für Betriebsmittel von Kraftfahrzeugen, mit zwei metallischen Halbschalen (3, 4), von denen eine zumindest eine von ihrem Rand (5) beabstandete Öffnung (6) aufweist, umfassend die Schritte:
Aufbringen von Beschichtungsmaterial auf die konkave Innenseite (16, 17) jeder Halbschale (3, 4) unter Freilassen jeweils eines vom Rand (5, 20) der Halbschale (3,4) ausgehenden umlaufenden Randbereichs (21, 22);
Zusammenfügen der Halbschalen (3, 4) an den Randbereichen (21, 22), außenseitiges Verschweißen der Randbereiche (21, 22) mit einer umlaufenden Schweißnaht (23) und Abkühlenlassen derselben; und
Einführen einer Sprühdüse (26', 26") durch die zumindest eine Öffnung (6) und Aufsprühen von weiterem Beschichtungsmaterial auf die nach innen sich darbietenden Teile (28, 29) der Randbereiche (21, 22).

2. Verfahren nach Anspruch 1, **dadurch gekennzeichnet, dass** die eingeführte Sprühdüse (26') das weitere Beschichtungsmaterial beim Aufsprühen in einer zur Schweißnaht (23) etwa parallelen Ebene rundum versprüht.

3. Verfahren nach Anspruch 1, **dadurch gekennzeichnet, dass** die Sprühdüse (26") an einem Ende (32) einer hakenförmigen Lanze (33) sitzt, welche von ihrem anderen, außerhalb der Öffnung (6) verbleibenden Ende (34) aus bewegt wird.

4. Verfahren nach Anspruch 3, **dadurch gekennzeichnet, dass** eine der Halbschalen (3, 4) zumindest zwei voneinander und von ihrem Rand (5) beabstandete Öffnungen (6, 7) hat, wobei das Einführen der Sprühdüse (26") für jede Öffnung (6, 7) separat ausgeführt wird und dabei die Sprühdüse (26") das weitere Beschichtungsmaterial pro Öffnung (6, 7) jeweils auf einen anderen von mehreren in Umfangsrichtung aneinandergrenzenden Sektoren (35, 36) der Randbereiche (21, 22) aufsprüht.

5. Verfahren nach einem der Ansprüche 1 bis 4, **dadurch gekennzeichnet, dass** als Beschichtungsmaterial und weiteres Beschichtungsmaterial jeweils ein rasch aushärtendes Polymer, bevorzugt ein rasch aushärtender Polyharnstoff, aufgebracht oder aufgesprüht wird.

6. Verfahren nach einem der Ansprüche 1 bis 5, **dadurch gekennzeichnet, dass** zumindest eine der beiden Halbschalen (3) in ihrem Randbereich (21) eine umlaufende Schulter (24) aufweist, an welcher der Rand (20) der anderen Halbschale (4) beim Zusammenfügen zur Anlage kommt und verschweißt wird.

7. Verfahren nach einem der Ansprüche 1 bis 6 zum Herstellen eines Zweikammertanks für unterschiedliche Betriebsmittel von Kraftfahrzeugen, umfassend den vorangestellten Schritt:
Einsetzen einer der beiden Halbschalen (4) in unbeschichtetem Zustand mit ihrer konvexen Außenseite (9) in ein durch eine Endkappe (10) zu einer zweiten Kammer (8) abschließbares Mantelblech (11), außenseitiges Verschweißen der genannten Halbschale (4) mit dem Mantelblech (11) mittels einer umlaufenden Schweißnaht und Abkühlenlassen derselben.

8. Verfahren nach Anspruch 7, **dadurch gekennzeichnet, dass** die genannte Halbschale (4) eine umlaufende Schulter (13) aufweist, an welcher das Mantelblech (11) zur Anlage kommt und angeschweißt wird.

9. Tank mit einer innenbeschichteten Kammer (2) für Betriebsmittel von Fahrzeugen, mit zwei metallischen Halbschalen (3, 4), von denen eine zumindest eine von ihrem Rand (5) beabstandete Öffnung (6) aufweist, wobei die beiden Halbschalen (3, 4) miteinander an jeweils von ihren Rändern (5, 20) ausgehenden umlaufenden Randbereichen (21, 22) außenseitig mit einer umlaufenden Schweißnaht (23) verschweißt sind, **dadurch gekennzeichnet, dass**
die konkave Innenseite (16) jeder Halbschale (3, 4) eine betriebsmittelresistente Beschichtung (18, 19) aufweist, von welcher jeweils der Randbereich (21, 22) frei ist,
wobei auf die nach innen sich darbietenden Teile (28, 29) der Randbereiche (21, 22) eine weitere betriebsmittelresistente Beschichtung (27) aufgebracht ist.

10. Tank nach Anspruch 9, **dadurch gekennzeichnet, dass** die weitere Beschichtung (27) die angrenzenden Beschichtungen (18, 19) der Halbschalen (3, 4) teilweise überlappt.

11. Tank nach Anspruch 9 oder 10, **dadurch gekennzeichnet, dass** die Beschichtungen (18, 19) und die weitere Beschichtung (27) Polymer-Beschichtungen, bevorzugt Polyharnstoff-Beschichtungen, sind.

12. Tank nach einem der Ansprüche 9 bis 11, **dadurch gekennzeichnet, dass** die Beschichtungen (18, 19) und die weitere Beschichtung (27) aus ein und demselben Material gefertigt sind.

13. Tank nach einem der Ansprüche 9 bis 12, **dadurch gekennzeichnet, dass** zumindest eine der beiden Halbschalen (3) in ihrem Randbereich (5) eine umlaufende Schulter (24) aufweist, an welcher der Rand (20) der anderen Halbschale (4) angeschweißt ist.

14. Tank nach einem der Ansprüche 9 bis 13, **gekennzeichnet durch** ein an seiner einen Stirnseite mit einer Endkappe (10) abgeschlossenes Mantelblech (11), an dessen andere Stirnseite die konvexe Außenseite (9) einer der beiden Halbschalen (4) mit einer umlaufenden Schweißnaht (12) angeschweißt ist, um eine weitere Kammer (8) für ein weiteres Betriebsmittel zu bilden.

15. Tank nach Anspruch 14, **dadurch gekennzeichnet, dass** die genannte Halbschale (4) eine umlaufende Schulter (13) aufweist, an welcher das Mantelblech (11) angeschweißt ist.

## Claims

1. A method for producing an internally-coated chamber (2) of a tank (1) for operating media of motor vehicles, with two metallic semi-shells (3, 4) one of which has at least one opening (6) spaced apart from the semi-shell's rim (5), comprising the steps:
applying coating material to the concave inner face (16, 17) of each semi-shell (3, 4) while leaving blank a respective circumferential rim area (21, 22) originating from the rim (5, 20) of the semi-shell (3, 4);
joining together the semi-shells (3, 4) at the rim areas (21, 22), externally welding the rim areas (21, 22) with a circumferential weld seam (23), and allowing the same to cool down; and
inserting a spray nozzle (26', 26") through the at least one opening (6) and spraying further coating material onto those parts (28, 29) of the rim areas (21, 22) that present themselves to the inside.

2. The method according to claim 1, **characterised in that** the inserted spray nozzle (26'), when spraying, sprays the further coating material all-around in a plane which is approximately parallel to the weld seam (23).

3. The method according to claim 1, **characterised in that** the spray nozzle (26") is seated at one end (32) of a hooked lance (33) which is moved from its other end (34) remaining outside the opening (6).

4. The method according to claim 3, **characterised in that** one of the semi-shells (3, 4) has at least two openings (6, 7) spaced apart from each other and from the semi-shell's rim (5), wherein the inserting of the spray nozzle (26") is performed separately for each opening (6, 7) and, in doing so, the spray nozzle (26") sprays the further coating material per opening (6, 7) onto a respective other one of several sectors (35, 36) of the rim areas (21, 22) which sectors are mutually adjoining in circumferential direction.

5. The method according to any one of claims 1 to 4, **characterised in that** a rapid curing polymer, preferably a rapid curing polyurea, is applied or sprayed as coating material and further coating material, respectively.

6. The method according to any one of claims 1 to 5, **characterised in that** at least one of the two semi-shells (3) has a circumferential shoulder (24) in its rim area (21) on which the rim (20) of the other semi-shell (4) comes to rest during joining and is welded.

7. The method according to any one of claims 1 to 6 for producing a two chamber tank for different operating media of motor vehicles, comprising the preceding step:
inserting one of the two semi-shells (4) in uncoated condition with its convex outer face (9) into a sheet metal jacket (11) that is closable to a second chamber (8) by an end cap (10), externally welding said semi-shell (4) on the sheet metal jacket (11) by means of a circumferential weld seam and allowing the same to cool down.

8. The method according to claim 7, **characterised in that** said semi-shell (4) has a circumferential shoulder (13) on which the sheet metal jacket (11) comes to rest and is welded.

9. A tank with an internally-coated chamber (2) for operating media of vehicles, with two metallic semi-shells (3, 4) one of which has at least one opening (6) spaced apart from the semi-shell's rim (5), wherein the two semi-shells (3, 4) are externally welded together with a circumferential weld seam (23) at circumferential rim areas (21, 22) respectively originating from their rims (5, 20), **characterised in that**
the concave inner face (16) of each semi-shell (3, 4) has a coating (18, 19) resistant to the operating media, of which coating the respective rim area (21, 22) is free,
wherein a further coating (27) resistant to the operating media is applied to those parts (28, 29) of the rim areas (21, 22) that present themselves to the inside.

10. The tank according to claim 9, **characterised in that** the further coating (27) partially overlaps the adjacent coating (18, 19) of the semi-shells (3, 4).

11. The tank according to claim 9 or 10, **characterised in that** the coatings (18, 19) and the further coating (27) are polymer coatings, preferably polyurea coatings.

12. The tank according to any one of claims 9 to 11, **characterised in that** the coatings (18, 19) and the further coating (27) are made of one and the same material.

13. The tank according to any one of claims 9 to 12, **characterised in that** at least one of the two semi-shells (3) has a circumferential shoulder (24) in its rim area (5) on which the rim (20) of the other semi-shell (4) is welded.

14. The tank according to any one of claims 9 to 13, **characterised by** a sheet metal jacket (11), one face end of which is closed with an end cap (10) and on the other face end of which the convex outer face (9) of one of the two semi-shells (4) is welded with a circumferential weld seam (12) for creating a further chamber (8) for a further operating media.

15. The tank according to claim 14, **characterised in that** said semi-shell (4) has a circumferential shoulder (13) on which the sheet metal jacket (11) is welded.

## Revendications

1. Procédé de fabrication d'une chambre (2) à revêtement intérieur d'un réservoir (1) destiné à des moyens de service de véhicules automobiles, avec deux demies coquilles (3, 4) métalliques dont l'une présente au moins un orifice (6) espacé de son bord (5), comprenant les étapes :
l'application d'un matériau de revêtement sur la face intérieure concave (16, 17) de chaque demie coquille (3, 4) moyennant l'épargnement d'une région de bord (21, 22) périphérique partant du bord (5, 20) de la demie coquille (3, 4) ;
l'assemblage des demies coquilles (3, 4) au niveau des régions de bord (21, 22)), le soudage du côté extérieur des régions de bord (21, 22) avec un cordon de soudure (23) périphérique et le laissez-refroidir de ceux-ci ; et
l'insertion d'une buse de pulvérisation (26', 26") dans l'au moins un orifice (6) et la pulvérisation d'au nouveau matériau de revêtement sur celles parties (28, 29) des régions de bord (21, 22), qui se présentent à l'intérieur.

2. Procédé selon la revendication 1, **caractérisé en ce que** la buse de pulvérisation (26') insérée pulvérise le nouveau matériau de revêtement, lors de la pulvérisation, tout autour dans un plan à peu près parallèle par rapport au cordon de soudure (23).

3. Procédé selon la revendication 1, **caractérisé en ce que** la buse de pulvérisation (26") repose sur une lance (33) en forme de crochet à une extrémité (32), laquelle lance est déplacée par son autre extrémité (34) restante en dehors de l'orifice (6).

4. Procédé selon la revendication 3, **caractérisé en ce qu'**une des demies coquilles (3, 4) possède au moins deux orifices (6, 7) espacés l'un de l'autre et par rapport à son bord (5), où l'insertion de la buse de pulvérisation (26") est effectuée de manière séparée pour chaque orifice (6, 7) et ainsi la buse de pulvérisation (26") pulvérise le nouveau matériau de revêtement par chaque orifice (6, 7) sur un autre parmi plusieurs secteurs (35, 36) des régions de bord (21, 22) voisins les uns des autres dans la direction circonférentielle.

5. Procédé selon l'une des revendications 1 à 4, **caractérisé en ce qu'**en tant que matériau de revêtement et que nouveau matériau de revêtement, respectivement, un polymère durcissant rapidement, de préférence, une poly-urée durcissant rapidement, est appliqué ou est pulvérisé.

6. Procédé selon l'une des revendications 1 à 5, **caractérisé en ce qu'**au moins une des deux demies coquilles (3) présente un épaulement (24) périphérique dans sa région de bord (21), sur lequel le bord (20) de l'autre demie coquille (4) vient en appui et est soudé lors de l'assemblage.

7. Procédé selon l'une des revendications 1 à 6 destiné à la fabrication d'un réservoir à deux chambres pour des moyens de service divers de véhicules automobiles, comprenant l'étape antéposée :
le montage d'une des deux demies coquilles (4) à l'état non revêtu avec son côté extérieur (9) convexe dans une tôle d'enveloppe (11) pouvant être scellée par un capuchon d'extrémité (10) pour faire une deuxième chambre (8), le soudage du côté extérieur de ladite demie coquille (4) avec la tôle d'enveloppe (11) au moyen d'un cordon de soudure périphérique et le laissez-refroidir de ceux-ci.

8. Procédé selon la revendication 7, **caractérisé en ce que** ladite demie coquille (4) présente un épaulement (13) périphérique sur lequel la tôle d'enveloppe (11) vient en appui et est soudé.

9. Réservoir avec une chambre (2) à revêtement intérieur pour des moyens de service de véhicules, avec deux demies coquilles (3, 4) métalliques, parmi lesquelles une présente au moins un orifice (6) espacé de son bord (5), où les deux demies coquilles (3, 4) sont soudées extérieurement l'une à l'autre au niveau de leurs régions de bord (21, 22) périphériques partant respectivement de leurs bords (5, 20) avec un cordon de soudure (23) périphérique, **caractérisé en ce que**
le côté intérieur (16) concave de chaque demie coquille (3, 4) présente un revêtement (18, 19) résistant aux moyens de service, dont la région de bord (21, 22) est respectivement épargnée,
où un nouveau revêtement (27) résistant aux moyens de service est appliqué sur celles parties (28, 29) des régions de bord (21, 22), qui se présentent à l'intérieur.

10. Réservoir selon la revendication 9, **caractérisé en ce que** le nouveau revêtement (27) se superpose partiellement aux revêtements (18, 19) voisins des demies coquilles (3, 4).

11. Réservoir selon la revendication 9 ou la revendication 10, **caractérisé en ce que** les revêtements (18, 19) et le nouveau revêtement (27) sont des revêtements de polymères, de préférence, des revêtements de poly-urée.

12. Réservoir selon l'une des revendications 9 à 11, **caractérisé en ce que** les revêtements (18, 19) et le nouveau revêtement (27) sont fabriqués à base du même matériau.

13. Réservoir selon l'une des revendications 9 à 12, **caractérisé en ce qu'**au moins une des deux demies coquilles (3) présente un épaulement (24) périphérique au niveau de sa région de bord (5), sur lequel est soudé le bord (20) de l'autre demie coquille (4).

14. Réservoir selon l'une des revendications 9 à 13, **caractérisé par** une tôle d'enveloppe (11) fermée avec un capuchon d'extrémité (10) au niveau de son côté frontal, sur l'autre côté frontal de celle-ci est soudé le côté extérieur (9) convexe d'une des deux demies coquilles (4) avec un cordon de soudure (12) périphérique, afin de constituer une nouvelle chambre (8) pour un nouveau moyen de service.

15. Réservoir selon la revendication 14, **caractérisé en ce que** ladite demie coquille (4) présente un épaulement (13) périphérique sur lequel est soudée la tôle d'enveloppe (11).
